# EUROPÄISCHE PATENTSCHRIFT

(11) **EP 0 717 859 B1**
(45) Veröffentlichungstag und Bekanntmachung des Hinweises auf die Patenterteilung: **05.11.1997**
(21) Anmeldenummer: 94924705.0
(22) Anmeldetag: 25.08.1994
(51) Int. Cl.: G02B 6/38, H02G 15/00, H02G 1/00

(54) **STECKVERBINDER**
PLUG-TYPE CONNECTOR
CONNECTEUR A FICHES

(30) Priorität: 08.09.1993 DE 4330941
(43) Veröffentlichungstag der Anmeldung: 26.06.1996
(73) Patentinhaber: SIEMENS AKTIENGESELLSCHAFT, 80333 München (DE)
(72) Erfinder: KUCHENBECKER, Thomas, D-13597 Berlin (DE)
(86) Internationale Anmeldenummer: DE9401004
(87) Internationale Veröffentlichungsnummer: WO9507479

(56) Entgegenhaltungen:
- EP-A- 0 156 397
- EP-A- 0 491 046
- DE-A- 3 820 950
- US-A- 4 984 865

## Beschreibung

Die Erfindung betrifft einen Steckverbinder für ein Ende eines optischen Kabels, das mindestens eine von einem Fasermantel umgebene Lichtleitfaser, eine strangförmige Zugentlastung und einen Kabelmantel enthält,
mit einem Steckerstift mit einer zentralen Längsbohrung zur Aufnahme des abgemantelten Lichtleitfaserendes,
mit einer Stiftaufnahme, die den rückwärtigen Steckerstiftbereich aufnimmt und in einem Gehäuse entgegen einer Rückstellkraft axial verschiebbar gelagert ist,
mit zentralen Öffnungen in der Stiftaufnahme und in dem Gehäuse, durch die die Lichtleitfaser und der Fasermantel in den Kabelmantel zurückverschieblich sind, und
mit Mitteln zum endseitigen Festlegen der Zugentlastung an dem Gehäuse.

Ein derartiger bekannter (EP-A1-0 330 399) Steckverbinder bildet ein Kopplungsendstück zum Anschluß eines optischen Kabels an beispielsweise ein weiteres optisches Kabel oder an ein opto-elektronisches Bauelement. Das Kabel umfaßt zumindest einen Kabelmantel, eine in diesem verlaufende strangförmige Zugentlastung (z. B. KEVLAR®-Fasern) und eine Lichtleitfaser, die von einem schützenden Fasermantel (Buffer) umgeben ist.

Das koppelseitige Lichtleitfaserende verläuft in einer zentralen Längsbohrung eines Steckerstifts. Das rückwärtige Ende des Steckerstifts wird von einer Stiftaufnahme gehalten, die eine Anschlagfläche für ein Ende einer Schraubenfeder aufweist. Das andere Ende der Schraubenfeder stützt sich an einer Stirnfläche eines hinteren (inneren) Gehäuseteils ab, so daß der Steckerstift entgegen der Federkraft axial verschiebbar gelagert ist. Der Fasermantel verläuft in zentralen Bohrungen der Stiftaufnahme und des Gehäuses. Diese Konstruktion erlaubt beim Zurückschieben des Steckerstiftes das Zurückschieben und Eintauchen des Fasermantels in den Kabelmantel und in die Zugentlastung, so daß die bei rückwärtiger Verschiebung des Steckerstiftes auftretende Faserüberlänge nicht zu unzulässig hohen Biege- und Knickbelastungen der Faser führt. Um axiale Zugbelastungen von der Faser fernzuhalten, ist das Ende der Zugentlastung zwischen einem rückwärtigen Fortsatz des Gehäuses und einer separaten Hülse durch Crimpen festgelegt. Um die dabei auftretenden Radialkräfte aufzunehmen, muß das Gehäuse aus Metall gefertigt sein.

Der bekannte Steckverbinder erfordert verhältnismäßig viele (separat zu handhabende Hülse) und fertigungsintensive, teure (Metallgehäuse) Teile und mehrere Fertigungsschritte zum sicheren Festlegen des Zugentlastungsendes; so muß in einem ersten Montageschritt die Hülse auf das Kabel aufgefädelt und nach Fixierung der Faser in dem Steckerstift mit dem Fortsatz des Gehäuses vercrimpt werden.

Bei einem aus der US-PS 4,984,865 bekannten Steckverbinder ist eine zentrale Öffnung einer Stiftaufnahme mit einem Klebstoff oder Vergußmittel ausgefüllt, in den bzw. das sowohl eine Lichtleitfaser und deren Fasermantel als auch die Enden einer strangförmigen Zugentlastung vollständig eingebettet sind. Der Steckerstift mit der Lichtleitfaser und der Fasermantel sind bei diesem Konstruktionsprinzip gegenüber der Zugentlastung axial nicht verschiebbar.

Der Erfindung liegt die Aufgabe zugrunde, die Herstellung eines Steckverbinders hinsichtlich der Festlegung der Zugentlastung zu vereinfachen.

Diese Aufgabe wird erfindungsgemäß bei einem Steckverbinder der eingangs genannten Art dadurch gelöst, daß das Gehäuse einen Aufnahmeraum aufweist, in den das Ende der Zugentlastung einbringbar ist, daß der Aufnahmeraum von der zentralen Gehäuseöffnung flüssigkeitsdicht getrennt ist und daß die Zugentlastung endseitig durch Klebung und/oder Verguß in dem Aufnahmeraum fixierbar ist.

Ein wesentlicher Vorteil der Erfindung besteht darin, daß die Zugentlastung ohne zusätzliche Einzelteile in dem Gehäuse fixierbar ist. Das Verkleben und/oder Vergießen der Zugentlastung ersetzt das hinsichtlich der Wiederholgenauigkeit und Krafteinwirkung auf das Gehäuse problematische Crimpen. Dadurch kann das Gehäuse aus preiswerteren Werkstoffen gefertigt sein. Der Klebstoff oder das Vergußmittel kann vorab in den Aufnahmeraum und auch in den Eintrittsbereich der Längsbohrung in dem Steckerstift eingebracht werden, so daß die Lichtleitfaser in die Längsbohrung und die Zugentlastung in den Aufnahmeraum in einem einzigen Einfädelvorgang eingebracht und anschließend fixiert werden können. Vorzugsweise werden dazu lichtaushärtende Stoffe verwendet. Die flüssigkeitsdichte Trennung von Aufnahmeraum und zentraler Öffnung des Gehäuses verhindert ein unerwünschtes Benetzen des Fasermantels mit Klebstoff oder Vergußmasse, so daß die Axialverschieblichkeit des Fasermantels in den Kabelmantel gewährleistet bleibt.

Eine hinsichtlich der Einführung des Zugentlastungsendes in den Aufnahmeraum besonders vorteilhafte Weiterbildung der Erfindung besteht darin, daß der Aufnahmeraum einen im wesentlichen kreisförmigen Querschnitt aufweist und an der rückwärtigen Stirnfläche des Gehäuses mündet. Zur Festlegung des Zugentlastungsendes ist ein sich konisch verjüngender Aufnahmeraum vorteilhaft.

Hinsichtlich der Fertigungskosten und der Materialkosten ist es besonders vorteilhaft, wenn das Gehäuse ein Kunststoffspritzteil ist.

Eine einfache Handhabung des vormontierten Steckverbinders mit bereits in den Aufnahmeraum eingebrachtem Klebstoff und/oder Vergußmittel läßt sich dadurch erreichen, daß das Ende des Kabelmantels den Aufnahmeraum annähernd flüssigkeitsdicht verschließt.

Der Fasermantel läßt sich gemäß einer vorteilhaften Fortbildung der Erfindung unter Vermeidung von Biegebeanspruchungen der Lichtleitfaser besonders gut und weit in den Kabelmantel zurückschieben, wenn die Innenwand des Aufnahmeraums sich zumindest teilweise in den Kabelmantel erstreckt.

Eine weitere fertigungstechnisch bevorzugte Fortbildung der Erfindung besteht darin, daß das Gehäuse wenigstens eine Vertiefung ausweist, in die ein Formteil einer Kabel-Knickschutztülle einrastet.

Ein Ausführungsbeispiel der Erfindung wird nachfolgend anhand einer Figur näher erläutert.

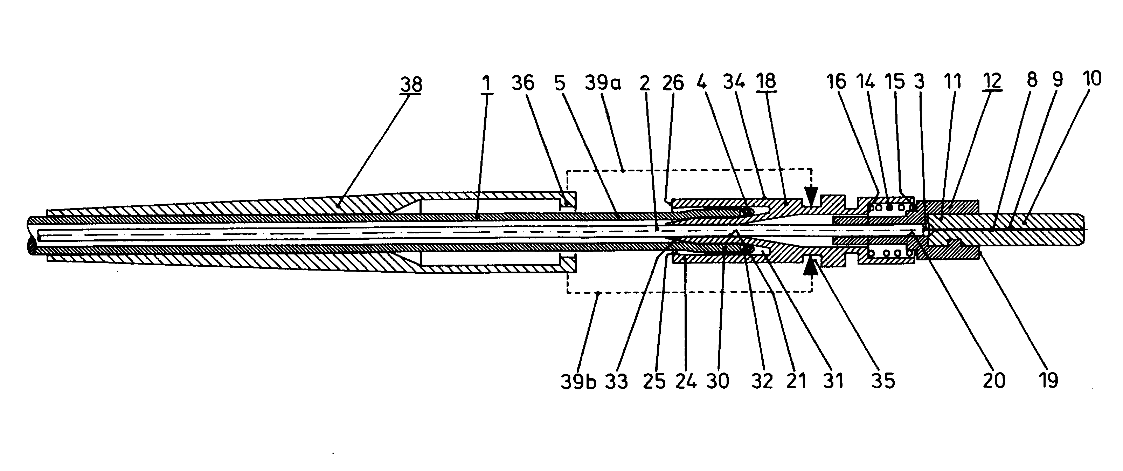

Die Figur zeigt ein Ende eines optischen Kabels 1, das eine von einem schützenden Fasermantel 2 (Pufferhülle) umgebende Lichtleitfaser 3, KEVLAR®-Fasern als strangförmige Zugentlastungsmittel 4 und einen Kabelmantel 5 enthält. Bei dem Kabel kann es sich auch um ein Hybridkabel handeln, das neben der Lichtleitfaser auch elektrische Leiter enthält. Das abgemantelte Ende 8 der Lichtleitfaser 3 ist von einer zentralen Längsbohrung 9 eines Steckerstiftes 10 aufgenommen. Der rückwärtige Steckerstiftbereich 11 ist in ein Kunststoffteil eingespritzt, das als Stiftaufnahme 12 dient. Eine Schraubenfeder 14 stützt sich mit ihrem einen Ende an einer Schulter 15 der Stiftaufnahme 12 und mit ihrem anderen Ende an einer frontseitigen Stirnfläche 16 eines inneren Gehäuses 18 (Kunststoffspritzteil) ab. Der Steckerstift 10 ist somit relativ zu dem Gehäuse 18 entgegen der Federkraft 14 axial zurückschiebbar. Die Bewegung des Steckerstiftes nach vorn wird durch ein weiteres, in der Figur nicht dargestelltes Gehäuseteil begrenzt, das einen Anschlag für die stirnseitige Fläche 19 der Stiftaufnahme 12 aufweist.

Der Fasermantel 2 erstreckt sich durch eine zentrale Bohrung 20 der Stiftaufnahme 12 und durch eine zentrale Öffnung 21 des Gehäuses 18. Das Gehäuse 18 weist im rückwärtigen Bereich 24 einen Vergußtopf oder Aufnahmeraum in Form einer im wesentlichen hohlzylindrischen, sich konisch verjüngenden Ausnehmung 25 auf, die zur rückwärtigen Stirnfläche 26 des Gehäuses 18 hin offen ist. Die Ausnehmung 25 ist von der zentralen Öffnung 21 flüssigkeitsdicht getrennt ausgebildet. Ein in die Ausnehmung 25 eingeführtes Ende 30 des Kabelmantels 5 schließt diese nach außen hin annähernd flüssigkeitsdicht ab, so daß in den tieferen Bereich der Ausnehmung 25 eingebrachter, lichtaushärtbarer Klebstoff 31 bei der Handhabung des vormontierten Steckverbinders nicht mehr auslaufen kann. Die zum Aushärten notwendige Lichtwellenlänge des Klebestoffs 31 ist auf die Lichtdurchlässigkeit des Kabelmantels 5 und/oder des für das Gehäuse 18 verwendeten Kunststoffs abgestimmt.

Ein Ende 32 der Zugentlastung 4 ist zumindest teilweise über das Ende 30 des Kabelmantels 5 zurückgeschlagen. Die Innenwand 33 der Ausnehmung 25 erstreckt sich erheblich in den Kabelmantel 5. Dadurch wird sowohl eine verbesserte axiale Verschiebbarkeit des Fasermantels 2 in dem Kabelmantel 5 gewährleistet als auch ein dort unerwünschtes Benetzen des Fasermantels 2 durch den Klebstoff 31 verhindert. Das Gehäuse 18 weist an seiner Mantelfläche 34 eine umlaufende nutförmige Vertiefung 35 auf, in die ein Formteil 36 einer Kabel-Knickschutztülle 38 einrastet, die gemäß den gestrichelt angedeuteten Pfeilen 39a, 39b auf das Gehäuse 18 geschoben wird. Das Formteil 36 besteht aus einer umlaufenden, nach innen weisenden Lippe. Im übrigen kann der erfindungsgemäße Steckverbinder wie der aus der EP-A1-0 330 399 bekannte Steckverbinder aufgebaut sein; insbesondere kann ein weiteres Gehäuse (Außengehäuse) vorgesehen sein, das das (innere) Gehäuse 18 aufnimmt.

Bei der Montage des erfindungsgemäßen Steckverbinders werden zunächst der mit der Stiftaufnahme 12 verbundene Steckerstift 10, die Feder 14 und das Gehäuse 18 (z. B. in dem Außengehäuse) vormontiert. Dabei wird in die Ausnehmung 25 und im rückwärtigen Bereich der Längsbohrung 9 der lichtaushärtender Klebstoff appliziert. Anschließend wird das durch teilweise Entfernung von Fasermantel und Kabelmantel vorbereitete Kabel in einem einzigen Fertigungsschritt eingefädelt, bis das Ende 30 des Kabelmantels 5 die Ausnehmung 25 annähernd flüssigkeitsdicht verschließt. Die Tiefe der Ausnehmung 25 und die Längen von Fasermantel 2 und Lichtleitfaserende 8 sind so bemessen, daß ein Anstoßen der Fasermantelstirnfläche an den Steckerstift 10 ausgeschlossen ist. Dann wird vorzugsweise gleichzeitig der Klebstoff 31 in der Ausnehmung 25 und in der Bohrung 9 des Steckerstifts 10 durch Lichtbeaufschlagung ausgehärtet.

Der erfindungsgemäße Steckverbinder erlaubt in einem einzigen Arbeitsgang das Einführen der Lichtleitfaser in den Steckerstift und die Festlegung der strangförmigen Zugentlastung, ohne daß es mechanischer Festlegungsverfahren bedarf. Der erfindungsgemäße Steckverbinder umfaßt vergleichsweise wenig Einzelteile und ist in wenigen einfachen Fertigungsschritten herstellbar.

## Patentansprüche

1. Steckverbinder für ein Ende eines optischen Kabels (1), das mindestens eine von einem Fasermantel (2) umgebene Lichtleitfaser (3), eine strangförmige Zugentlastung (4) und einen Kabelmantel (5) enthält,
mit einem Steckerstift (10) mit einer zentralen Längsbohrung (9) zur Aufnahme des abgemantelten Lichtleitfaserendes (8),
mit einer Stiftaufnahme (12), die den rückwärtigen Steckerstiftbereich (11) aufnimmt und in einem Gehäuse (18) entgegen einer Rückstellkraft axial verschiebbar gelagert ist,
mit zentralen Öffnungen (20,21) in der Stiftaufnahme (12) und in dem Gehäuse (18), durch die die Lichtleitfaser (3) und der Fasermantel (2) in den Kabelmantel (5) zurückverschieblich sind, und
mit Mitteln zum endseitigen Festlegen der Zugentlastung (4) an dem Gehäuse (18),
**dadurch gekennzeichnet,**
daß das Gehäuse (18) einen Aufnahmeraum (25) aufweist, in den das Ende (32) der Zugentlastung (4) einbringbar ist,
daß der Aufnahmeraum (25) von der zentralen Gehäuseöffnung (21) flüssigkeitsdicht getrennt ist und
daß die Zugentlastung (4) endseitig durch Klebung und/oder Verguß in dem Aufnahmeraum (25) fixierbar ist.

2. Steckverbinder nach Anspruch 1,
**dadurch gekennzeichnet,** daß der Aufnahmeraum (25) einen im wesentlichen kreisringförmigen Querschnitt aufweist und an der rückwärtigen Stirnfläche (26) des Gehäuses (18) mündet.

3. Steckverbinder nach Anspruch 1 oder 2,
**dadurch gekennzeichnet,** daß sich der Aufnahmeraum (25) konisch verjüngt.

4. Steckverbinder nach einem der vorangehenden Ansprüche,
**dadurch gekennzeichnet,** daß das Gehäuse (18) ein Kunststoffspritzteil ist.

5. Steckverbinder nach einem der vorangehenden Ansprüche,
**dadurch gekennzeichnet,** daß das Ende (30) des Kabelmantels (5) den Aufnahmeraum (25) annähernd flüssigkeitsdicht verschließt.

6. Steckverbinder nach einem der Ansprüche 2 bis 5,
**dadurch gekennzeichnet,** daß die Innenwand (33) des Aufnahmeraums (25) sich zumindest teilweise in den Kabelmantel (5) erstreckt.

7. Steckverbinder nach einem der vorangehenden Ansprüche,
**dadurch gekennzeichnet,** daß das Gehäuse (18) wenigstens eine Vertiefung (35) ausweist, in die ein Formteil (36) einer Kabel-Knickschutztülle (38) einrastet.

## Claims

1. Plug-in connector for an end of an optical cable (1), which contains at least one optical fibre (3) surrounded by a fibre sheath (2), a cord-type cable grip (4) and a cable sheath (5),
having a plug pin (10) with a central longitudinal bore (9) to receive the unsheathed end of the optical fibre (8),
having a pin receptacle (12) which receives the rear plug-pin region (11) and is mounted in a housing (18) such that it can be displaced axially against a restoring force,
having central openings (20, 21) in the pin receptacle (12) and in the housing (18), through which the optical fibre (3) and the fibre sheath (2) can be pushed back into the cable sheath (5), and
having means for securing the end of the cable grip (4) to the housing (18),
characterized in that the housing (18) has a receiving space (25) into which the end (32) of the cable grip (4) can be introduced, in that the receiving space (25) is separated from the central housing opening (21) in a liquid-tight manner and in that the end of the cable grip (4) can be fixed by adhesion and/or casting in the receiving space (25).

2. Plug-in connector according to claim 1, characterized in that the receiving space (25) has a substantially annular cross section and opens at the rear front surface (26) of the housing (18).

3. Plug-in connector according to claim 1 or 2, characterized in that the receiving space (25) is tapered conically.

4. Plug-in connector according to one of the preceding claims, characterized in that the housing (18) is a plastics moulded part.

5. Plug-in connector according to one of the preceding claims, characterized in that the end (30) of the cable sheath (5) seals the receiving space (25) in an approximately liquid-tight manner.

6. Plug-in connector according to one of claims 2 to 5, characterized in that the inner wall (33) of the receiving space (25) extends at least partially into the cable sheath (5).

7. Plug-in connector according to one of the preceding claims, characterized in that the housing (18) has at least one depression (35) into which a shaped part (36) of a sleeve which protects against cable-buckling (38) catches.

## Revendications

1. Connecteur pour une extrémité d'un câble (1) optique qui comprend au moins une fibre optique (3) entourée d'une gaine (2), un élément (4) de décharge de traction en forme de corde et une gaine (5) de câble, comportant une broche (10) pourvue d'un perçage (9) longitudinal central destiné à recevoir l'extrémité (8) dénudée de la fibre optique,
un support (12) de broche qui reçoit la partie (11) arrière de la broche et est monté dans un boîtier (18) de façon à pouvoir être déplacé axialement à l'encontre d'une force de rappel,
des ouvertures (20, 21) centrales dans le support (12) de broche et dans le boîtier (18) à travers lesquelles la fibre optique (3) et la gaine (2) de fibre peuvent être reculées dans la gaine (5) de câble, et
des moyens destinés à fixer, du côté terminal, l'élément (4) de décharge de traction sur le boîtier,
caractérisé en ce
que le boîtier (18) comporte une chambre (25) de réception dans laquelle l'extrémité (32) de l'élément (4) de décharge de traction peut être insérée,
que la chambre (25) de réception est séparée de manière étanche au liquide de l'ouverture (21) centrale du boîtier et
que l'élément (4) de décharge de traction peut être fixé du côté terminal dans la chambre (25) de réception par collage et/ou scellement.

2. Connecteur selon la revendication 1, caractérisé en ce que la chambre (25) de réception a une section transversale sensiblement en anneau de cercle et débouche sur la face (26) frontale arrière du boîtier (18).

3. Connecteur selon la revendication 1 ou 2, caractérisé en ce que la chambre (25) de réception se rétrécit en cône.

4. Connecteur selon l'une des revendications précédentes, caractérisé en ce que le boîtier (18) est une pièce en matière plastique moulée par injection.

5. Connecteur selon l'une des revendications précédentes, caractérisé en ce que l'extrémité (30) de la gaine (5) de câble ferme la chambre (25) de réception de manière approximativement étanche au liquide.

6. Connecteur selon l'une des revendications 2 à 5, caractérisé en ce que la paroi (33) intérieure de la chambre (25) de réception s'étend au moins en partie dans la gaine (5) de câble.

7. Connecteur selon l'une des revendications précédentes, caractérisé en ce que le boîtier (18) comporte au moins un creux (35) dans lequel s'enclenche un élément (36) moulé d'une gaine (38) anti-flambage pour câbles.
